# EUROPÄISCHE PATENTANMELDUNG

(11) **EP 3 287 353 A1**
(43) Veröffentlichungstag der Anmeldung: **28.02.2018**
(21) Anmeldenummer: 16001866.9
(22) Anmeldetag: 25.08.2016
(51) Int. Cl.: B62K 21/12

(54) **FAHRRADLENKER MIT LENKERZUSATZGRIFFEN**

(71) Anmelder: Klieber, Jochen, 83342 Tacherting (DE)
(72) Erfinder: Klieber, Jochen, 83342 Tacherting (DE)
(74) Vertreter: Maiwald Patentanwalts GmbH

(57) **Zusammenfassung**

Es ist ein Fahrradlenker (100) mit einem Lenkerzusatzgriff (101) mit einer zusätzlichen Handballenauflage (106) angegeben. Der Lenkerzusatzgriff (101) ist zwischen dem üblichen Lenkergriff (102) und der Armatur (103) angeordnet und weist eine obere abgeflachte und eine untere abgeflachte Fläche auf. Ebenso kann der Lenkerzusatzgriff (101) ein Griffstück enthalten, welches eine weitere abgeflachte Auflagefläche aufweist. Insbesondere kann die obere abgeflachte Fläche als Absenkung zwischen der Schelle (104) und dem Griffstück ausgeführt sein. Eine zweikomponentige Ausführung des Lenkerzusatzgriffs (101) mit einer Grundkomponente, die einen Dom aufweist, und einem Aufsatz zum Aufstecken auf den Dom ist ebenso möglich. Dabei kann die zweite Komponente in Kunststoff ausgeführt sein. In einem weiteren Ausführungsbeispiei weist die zweite Komponente ein Griffstück mit zwei Auflageflächen auf, welche seitlich an dem Griffstück angeordnet sind.

## Beschreibung

### GEBIET DER ERFINDUNG

Die vorliegende Erfindung betrifft Fahrradlenker zur verbesserten Bereitstellung von Handballenauflagen und zusätzlichen Griffpositionen für den Benutzer. Insbesondere betrifft die vorliegende Erfindung Fahrradlenker mit einem Lenkerzusatzgriff zur Bereitstellung einer Handballenauflage sowie ein Fahrrad mit einem Fahrradlenker.

### TECHNOLOGISCHER HINTERGRUND

Zur Steigerung des Fahrkomforts, zur Bereitstellung zusätzlicher Griffpositionen und zur Fahrleistungssteigerung des Fahrers des Fahrrads werden heutzutage Lenkerzusatzgriffe am rechten und linken Ende des Fahrradlenkers montiert. Diese Lenkerzusatzgriffe werden meist als "Bar Ends" oder Lenkerhörnchen bezeichnet. Die Positionierung und Befestigung der aus dem Stand der Technik bekannten Lenkerzusatzgriffe findet daher im Anschluss an die beiden Lenkergriffe statt, welche am jeweiligen äußeren Ende des Lenkers fixiert sind. Eine Montierung der bekannten Lenkerzusatzgriffe über Schellen bzw. über eine innere Klemmung in dem rohrförmigen Lenker ist dabei üblich.

### ZUSAMMENFASSUNG DER ERFINDUNG

Es kann als eine Aufgabe der Erfindung angesehen werden, einen Fahrradlenker mit einem verbesserten Lenkerzusatzgriff bereitzustellen und damit insbesondere neue Griffoptionen und Handballenauflagen mit verbesserter Ergonomie für den Benutzer zu ermöglichen.

Es sind ein Fahrradlenker mit einem Lenkerzusatzgriff und ein Fahrrad gemäß den Merkmalen der unabhängigen Ansprüche angegeben. Weiterbildungen der Erfindung ergeben sich-aus den Unteransprüchen und aus der folgenden Beschreibung.

Die beschriebenen Ausführungsbeispiele betreffen gleichermaßen den Fahrradlenker und das Fahrrad.

Gemäß einem Ausführungsbeispiel der Erfindung ist ein Fahrradlenker mit einem Lenkerzusatzgriff zur Bereitstellung einer Handballenauflage angegeben. Der Fahrradlenker weist mindestens einen Lenkergriff und mindestens eine Armatur und mindestens einen Lenkerzusatzgriff mit einer Schelle auf. Im bevorzugten Ausführungsbeispiel wird der Fahrradlenker zwei Lenkergriffe, zwei Armaturen und zwei Lenkerzusatzgriffe mit jeweils einer Schelle aufweisen. Weiterhin ist der Lenkerzusatzgriff der vorliegenden Erfindung zwischen dem Lenkergriff und der Armatur mittels der Schelle am Lenker befestigt. Der Lenkerzusatzgriff weist einen ersten Abschnitt auf, der sich ausgehend von der Schelle vom Lenker nach vorne weg erstreckt. Der erste Abschnitt weist eine obere abgeflachte Fläche und eine untere abgeflachte Fläche auf, wobei die obere abgeflachte Fläche derart angeordnet ist, dass sie eine Handballenauflage für den Benutzer des Fahrrades bereitstellt. Als alternative Montagemöglichkeit für den Lenkerzusatzgriff kommt auch eine Position innerhalb der Armatur, also von der jeweiligen Armatur aus gesehen in Richtung des Vorbaus des Fahrrades versetzt, in Frage.

Die neuartige Anordnung des erfindungsgemäßen Lenkerzusatzgriffs zwischen dem Lenkergriff und der Armatur in Kombination mit der neuen geometrischen Form des Lenkerzusatzgriffs mit den beiden abgeflachten Flächen ermöglichen vollständig neue Griffpositionen für den Benutzer in dem bisher dafür nicht genutzten Bereich zwischen dem Lenkergriff und der Armatur.

Dabei kann die untere abgeflachte Fläche beispielsweise als Teil eines Steges ausgeführt sein, der an der Unterseite des Lenkerzusatzgriffes angeordnet ist und daher in Richtung des Bodens zeigt, auf dem das Fahrrad steht.

Die obere abgeflachte Fläche ist zur Abstützung des Handballens des Benutzers des Fahrradlenkers ausgeführt und geeignet. Eine Ablage der Hände auf den Handballen in dieser neuen Position, das heißt zwischen dem üblichen Lenkergriff und der Armatur, erlaubt in der Montageposition mit flach nach vorne springender oberen abgeflachten Fläche und einem nach innen vorspringenden Griffstück, eine engere Handauflage, als sie mit den aus dem Stand der Technik bekannten Lenkerzusatzgriffen möglich ist. Dies bietet die Möglichkeit neuer Griff- und Handballenablagepositionen für den Nutzer in dem Bereich zwischen dem Lenkergriff und der Armatur, der bisher nicht zur systematischen Handballenauflage in diesem Bereich mittels Lenkerzusatzgriffen genutzt wurde.

Dabei kann im Kontext der vorliegenden Erfindung der Begriff der "Armatur" beispielsweise als Brems- und/oder Schalthebel verstanden werden.

Dabei gilt in diesem und in jedem anderen Ausführungsbeispiel, dass die technischen Ausführungen bezüglich eines ersten Lenkergriffs, einer ersten Armatur und eines ersten Lenkerzusatzgriffs genauso auch für einen zweiten Lenkergriff, eine zweite Armatur und einen zweiten Lenkerzusatzgriff an dem Fahrradlenker gelten. Typischerweise ist an dem erfindungsgemäßen Fahrradlenker ein im Wesentlichen symmetrischer Aufbau gegeben, bei dem ein rechter und ein linker erfindungsgemäßer Lenkerzusatzgriff zum Einsatz kommt. Der Einfachheit und Übersichtlichkeit halber wird die vorliegende Erfindung im Folgenden jedoch anhand eines einzelnen Lenkerzusatzgriffs an dem erfindungsgemäßen Fahrradlenker beschrieben werden.

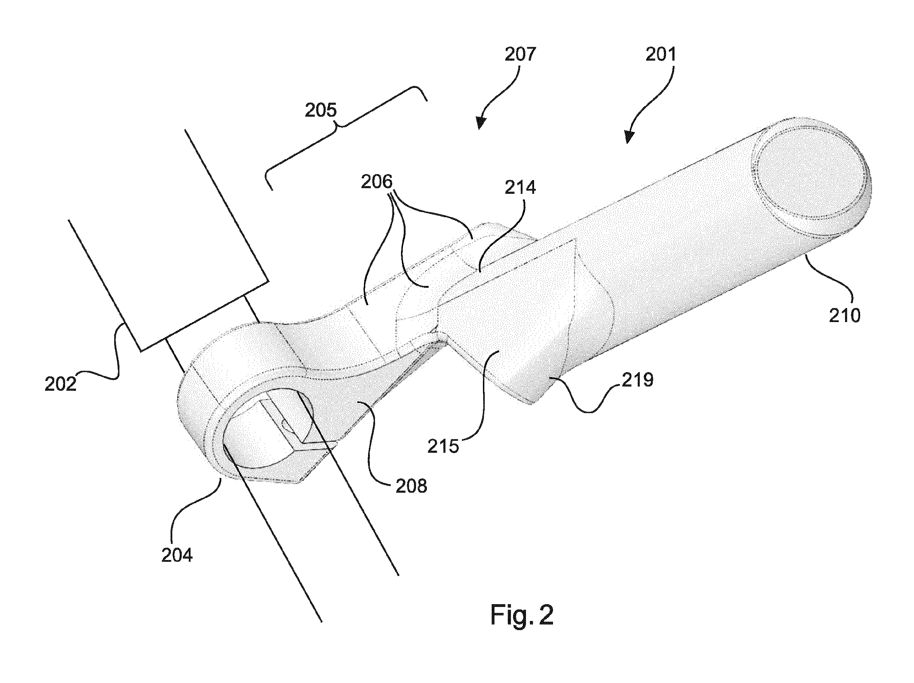

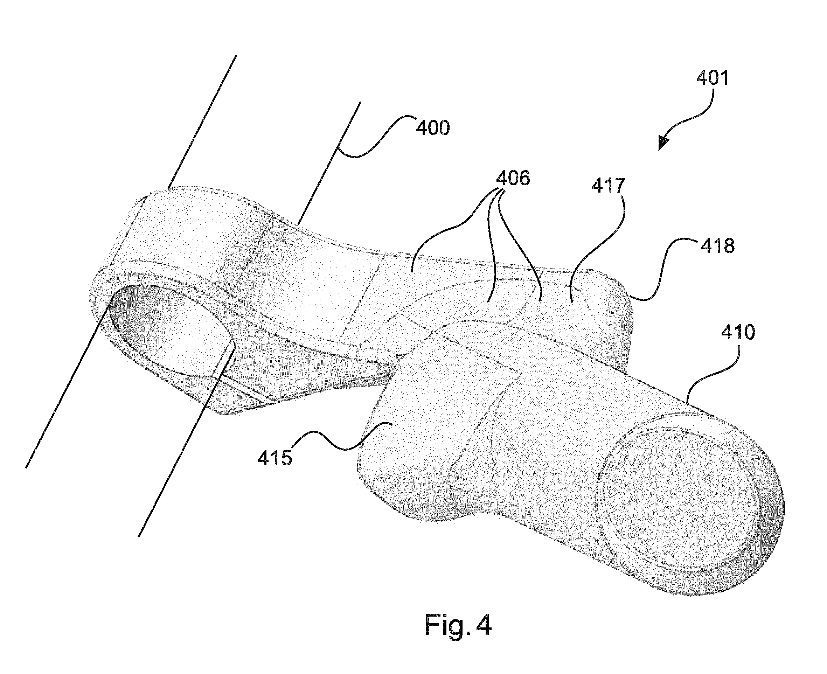

Der erste Abschnitt des Lenkerzusatzgriffs, in dem sich die obere und untere abgeflachten Flächen befinden, schließt sich ausgehend vom Lenker an die Schelle an. Wie beispielsweise den Ausführungsbeispielen in Fig. 2 und 4 entnommen werden kann, kann die ringförmige Schelle aus der Ringform und damit aus ihrer Wölbung heraus in eine Gegenwölbung übergehen, woran sich dann die obere abgeflachte Fläche (siehe beispielsweise Fig. 2, 206) anschließen kann. In einem weiteren Ausführungsbeispiel kann sich dann an die obere abgeflachte Fläche ein Griffstück anschließen.

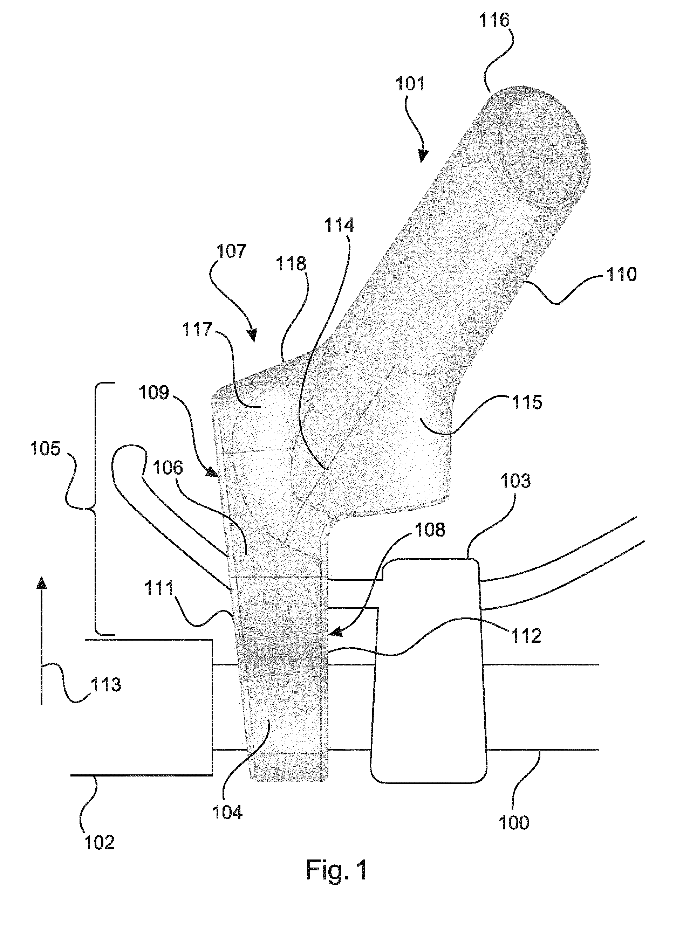

Die vorzugsweise ringförmige Schelle erlaubt die Befestigung an dem Fahrradlenker. Der sich daran anschließende erste Abschnitt mit der unteren abgeflachten Fläche ermöglicht es, dass sich die Armatur, beispielsweise ein Brems- und/oder Schalthebel, im montierten Zustand unterhalb des Lenkerzusatzgriffs nach außen hin, das heißt von der Armatur ausgehend in Richtung des Lenkergriffs, erstreckt. Durch die untere abgeflachte Fläche wird somit genügend Freiraum für die Armatur bereitgestellt. Dies kann beispielsweise gut dem Ausführungsbeispiel der Fig. 1 entnommen werden.

Die Kombination der oberen abgeflachten Fläche, welche eine Handballenauflage für den Benutzer bereitstellt, mit der unteren abgeflachten Fläche, welche einen Freiraum bereitstellt, in welchen die Armatur eindringen kann, erlaubt es, den erfindungsgemäßen Lenkerzusatzgriff in dem engen Bereich zwischen dem Lenkergriff und der Armatur anzuordnen und gleichzeitig die gewünschte Handballenauflage in diesem Bereich für den Benutzer bereitzustellen.

Gemäße einem Ausführungsbeispiel steht der Lenkerzusatzgriff über die Lenkervorderkante um 100 mm bis 170 mm, bevorzugt 130 mm hinaus.

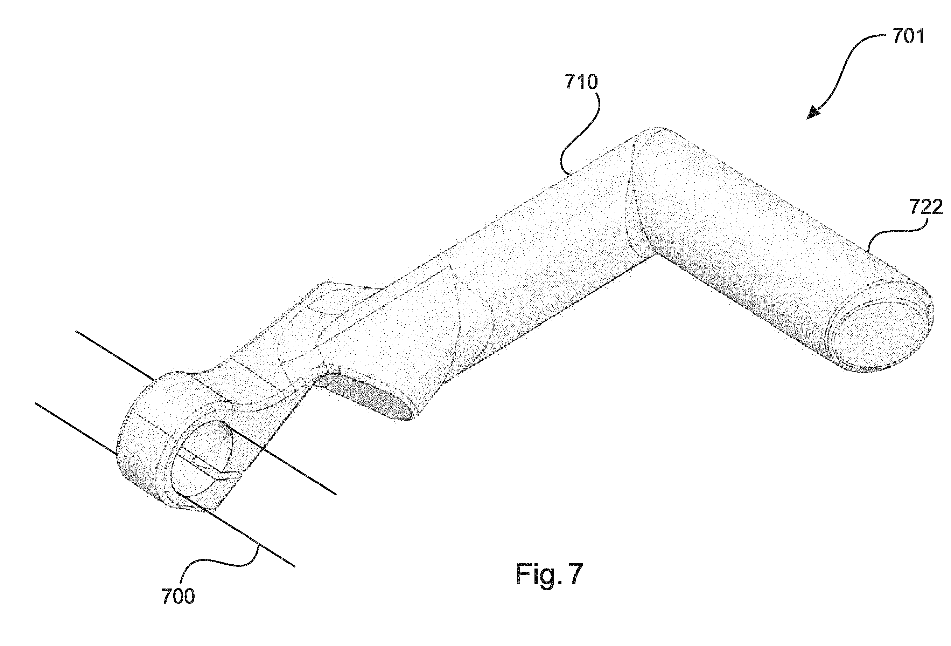

Gemäße einem weiteren Ausführungsbeispiel weist das Griffstück an seinem äußeren Ende, i.e., an seiner Spitze einen Griffabschnitt auf, der sich von der Spitze im Wesentlichen parallel zur Lenkerhauptachse erstreckt. Dies kann gut der Fig. 7 entnommen werden. Dabei deckt das Merkmal "im Wesentlichen parallel" eine Abweichung von bis zu +/- 20°, bevorzugt +/- 10°, ab. In diesem Ausführungsbeispiel steht der Lenkerzusatzgriff dann über die Lenkervorderkante um 100 mm bis 170 mm, bevorzugt 145 mm hinaus.

Gemäß einem weiteren Ausführungsbeispiel der Erfindung verläuft die obere abgeflachte Fläche an einer Oberseite des Lenkerzusatzgriffs und die untere abgeflachte Fläche verläuft an einer Unterseite des Lenkerzusatzgriffs.

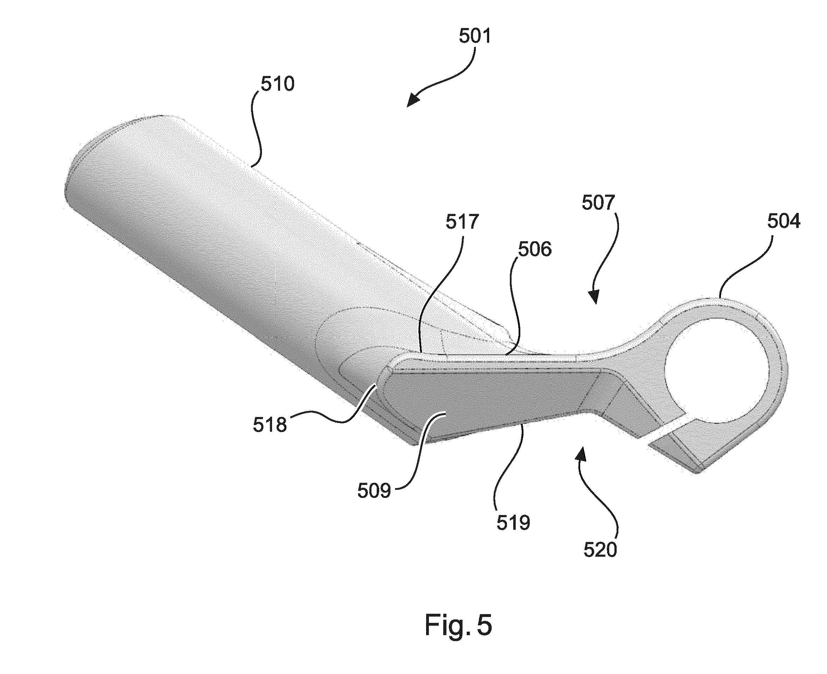

Dabei soll im Kontext der vorliegenden Erfindung der Begriff der "Oberseite" des Lenkerzusatzgriffs diejenige Seite bezeichnen, welche im montierten Zustand am Lenker zu dem Benutzer zeigt. Eine Aufsicht auf diese Oberseite des Lenkerzusatzgriffs und des Fahrradlenkers ist beispielsweise in der Fig. 1 gezeigt. Im Gegensatz zur Oberseite zeigt die "Unterseite" des Lenkerzusatzgriffs im montierten Zustand in Richtung des Bodens, auf welchem das Fahrrad steht. Mit anderen Worten zeigt die Oberseite zum Benutzer hin und die Unterseite zeigt vom Benutzer weg. Dies kann insbesondere auch der Seitenansicht der Fig. 5 entnommen werden und wird im Kontext dieser Figurenbeschreibung weiter erläutert werden.

Gemäß einem weiteren Ausführungsbeispiel der Erfindung weist der erste Abschnitt des Lenkerzusatzgriffs zwischen der oberen und unteren abgeflachten Fläche armaturseitig eine erste seitliche Anlagefläche auf. Diese erste seitliche Anlagefläche verbindet die obere und untere abgeflachte Fläche. Diese erste seitliche Anlagefläche verläuft im Wesentlichen senkrecht zur oberen abgeflachten Fläche und/oder im Wesentlichen senkrecht zur unteren abgeflachten Fläche. Weiterhin weist der erste Abschnitt des Lenkerzusatzgriffs zwischen der oberen und unteren abgeflachten Fläche lenkergriffseitig eine zweite seitliche Anlagefläche auf. Die zweite seitliche Anlagefläche verläuft schräg zwischen der oberen und der unteren abgeflachten Fläche.

Dabei soll "schräg" in diesem Ausführungsbeispiel als nach innen gewinkelt verstanden werden. Von außen, i.e. vom Lenkergriff betrachtet oder kommend, nähert sich die schräge Fläche nach unten hin dem Vorbau. Dies kann deutlich der Fig. 5 entnommen werden.

Dabei soll im Kontext der vorliegenden Erfindung der Begriff "armaturseitig" eine der Armatur zugewandte Seite des Lenkerzusatzgriffs bezeichnen. Weiterhin soll der Begriff "lenkergriffseitig" eine dem Lenkergriff zugewandte Seite des Lenkerzusatzgriffs bezeichnen.

Dabei soll "im Wesentlichen senkrecht" umfassen, dass der entsprechende Winkel nicht nur 90°, sondern auch 90° ± 1°, ± 2°, ± 3°, ± 4°, ± 5°, ± 6°, ± 8°, ± 9°, ± 10° sein kann.

Vorteilhafterweise erlaubt die angeschrägte seitliche Anlagefläche zusätzlichen Freiraum für die Finger des Benutzers beispielsweise beim Betätigen des Bremshebels, der unterhalb des Lenkerzusatzgriffs nach außen geführt wird. Ein solcher unterhalb des Lenkerzusatzgriffs verlaufender Bremshebel ist in der Fig. 1 gezeigt. Damit erlaubt dieses Ausführungsbeispiel der Erfindung eine kompakte Anordnung des Lenkergriffs, des Lenkerzusatzgriffs und der Armatur und stellt weiterhin mittels der angeschrägten Fläche genügend Freiraum zur Betätigung des Bremshebels und/oder des Schalthebels zur Verfügung, erlaubt gleichzeitig aber auch eine bequeme Handballenauflage auf dem Lenkerzusatzgriff in diesem engen Raum.

Ein Ausführungsbeispiel der ersten seitlichen Anlagefläche, die senkrecht zur oberen und unteren abgeflachten Fläche verläuft, ist deutlich in der Fig. 2 mit Bezugszeichen 208 gezeigt. Die zweite seitliche Anlagefläche, welche schräg zwischen der oberen unteren abgeflachten Fläche verläuft, ist hingegen gut in den Ansichten der Fig. 3 (Bezugszeichen 309) und Fig. 5 (Bezugszeichen 509) zu sehen.

Gemäß einem weiteren Ausführungsbeispiel ist die erste seitliche Anlagefläche als ausgewölbte Fläche zur Unterbringung von Armaturenkomponenten ausgeführt. Beispielsweise kann die ausgewölbte, erste seitliche Anlagefläche als Negativform der Armatur ausgeführt sein.

Gemäß einem weiteren Ausführungsbeispiel der Erfindung weist der Lenkerzusatzgriff ein Griffstück zum Umgreifen durch den Benutzer auf. Dabei definiert die obere abgeflachte Fläche griffseitig eine Außenkante und armaturseitig eine Innenkante des Lenkerzusatzgriffs. Weiterhin ist das Griffstück von der Außenkante zur Innenkante hin versetzt angeordnet.

Die nach innen versetzte Positionierung des Griffstücks erlaubt dem Benutzer sowohl eine Griffposition, in welcher er das Griffstück umgreift, und erlaubt aber auch eine Griffposition bzw. eine Auflageposition auf der oberen abgeflachten Fläche, welche weiter außen, das heißt weiter in Richtung des Lenkergriffs und weiter in Richtung der Außenkante im Vergleich zum Griffstück, angeordnet ist. Dies kann gut der Seitenansicht der Fig. 2 entnommen werden, in der die obere abgeflachte Fläche 206 sich vom Lenker weg erstreckt und das Griffstück 210 weiter nach innen versetzt ist bzw. beginnt. Mit anderen Worten erstreckt sich die obere abgeflachte Fläche ein Stück weit um das Griffstück herum.

Gemäß einem weiteren Ausführungsbeispiel der Erfindung erstreckt sich das Griffstück von dem ersten Abschnitt des Lenkerzusatzgriffs entlang einer im Vergleich zu einer Haupterstreckungsrichtung des ersten Abschnitts schrägen Richtung vom Lenker weg. Weiterhin schließt sich das Griffstück an die obere abgeflachte Fläche in einem Bereich an, der von der Außenkante des Lenkerzusatzgriffs in Richtung der Armatur angeordnet ist.

Diese geometrische Form dieses Ausführungsbeispiels kann deutlich der Fig. 1 entnommen werden. Die Position bzw. der Bereich 114 des Lenkerzusatzgriffs, in dem sich das Griffstück 110 zu erstrecken beginnt, liegt nicht an der Außenkante 111 des Lenkerzusatzgriffs, sondern ist von dieser Außenkante in Richtung Innenkante 112 versetzt. Damit wird ermöglicht, dass sich die obere abgeflachte Fläche 106 entlang der Haupterstreckungsrichtung 113 weiter vom Lenker weg erstreckt, obwohl sich das Griffstück bereits schräg von dieser Haupterstreckungsrichtung weg erstreckt.

Gemäß einem weiteren Ausführungsbeispiel der Erfindung weist das Griffstück armaturseitig eine abgeflachte Auflagefläche auf.

Die abgeflachte Auflagefläche kann z. B. tangential von der Oberfläche des Griffstücks weg verlaufen und somit einen sanften Übergang bilden, so dass eine niedrige spezifische Flächenbelastung erreicht wird.

Vorteilhafterweise kann mit diesem Ausführungsbeispiel eine Auflagefläche für die Daumenwurzel des Benutzers bereitgestellt werden. Diese Fläche 115 und 215 ist in den Figuren 1 und 2 deutlich gezeigt und werden auch als innerer Flügel bezeichnet, wohingegen die obere abgeflachte Fläche als äußerer Flügel bezeichnet wird. Zeige- und Mittelfinger können dann die Flächen 118 und 418 umklammern.

Insgesamt wird damit in dem engen Bereich zwischen dem Lenkergriff und der Armatur sowohl eine Handballenauflage durch die obere abgeflachte Fläche, als auch eine Griffposition durch das Griffstück als auch eine Auflagefläche für die Daumenwurzel des Benutzers bereitgestellt.

Gemäß einem weiteren Ausführungsbeispiel der Erfindung ist die obere abgeflachte Fläche als Absenkung zwischen der Schelle und dem Griffstück ausgeführt.

Diese Absenkung zwischen der Schelle und dem Griffstück kann beispielsweise dem Ausführungsbeispiel der Fig. 2 entnommen werden, in dem diese Absenkung 206 seitlich gezeigt ist.

Gemäß einem weiteren Ausführungsbeispiel der Erfindung ist das Griffstück an seinem vom Lenker entfernten Ende mit einem im Wesentlichen kreisförmigen Querschnitt ausgebildet.

Dabei können auch leichte Abweichungen von der Kreisform für das Griffstück verwendet werden.

Gemäß einem weiteren Ausführungsbeispiel der Erfindung erstreckt sich die obere abgeflachte Fläche lenkergriffseitig zumindest teilweise um das Griffstück herum in einen Endbereich hinein.

Grundsätzlich kann dieser Endbereich als ein Bereich der oberen abgeflachten Fläche verstanden werden. Wie den Ausführungsbeispielen der Fig. 1 und Fig. 2 entnommen werden kann, ermöglicht dieses Ausführungsbeispiel, dass die Handballenauflage als möglichst lange Fläche ausgebildet wird, die sich vom Lenker weg erstreckt, obwohl sich seitlich bereits das Griffstück schräg von dieser Haupterstreckungsrichtung der Handballenauflage nach innen, das heißt in Richtung der Armatur, schräg weg erstreckt.

Gemäß einem weiteren Ausführungsbeispiel der Erfindung verläuft der Endbereich der oberen abgeflachten Fläche in einen abgerundeten Bereich des Lenkerzusatzgriffs in Richtung einer Unterseite des Lenkerzusatzgriffs.

Dieses Ausführungsbeispiel ermöglicht ein einfaches Umschließen der oberen abgeflachten Fläche mittels der Finger des Benutzers. Dieses Umschließen des abgerundeten Bereichs bzw. dieser abgerundeten Fläche (siehe beispielsweise 118 und 518 in den Fig. 1 und 5) ermöglicht eine weitere ergonomisch sinnvolle und angenehme Griffposition für den Benutzer.

Gemäß einem weiteren Ausführungsbeispiel der Erfindung ist der Lenkerzusatzgriff zweistückig mit einer ersten und einer zweiten Komponente ausgeführt. Dabei ist die erste Komponente als Grundkomponente mit einem Dorn ausgeführt und die zweite Komponente ist als Aufsatz zum Aufstecken auf den Dorn der Grundkomponente ausgeführt.

Dieses Ausführungsbeispiel kann produktionstechnisch gewisse Vorteile bieten. Beispielsweise kann die zweite Komponente aus Kunststoff ausgeführt sein. In einem weiteren Ausführungsbeispiel weist die zweite Komponente zwei Auflageflächen auf, die seitlich an dem Griffstück angeordnet sind. Insbesondere können dabei die Auflageflächen am Griffstück angeordnet sein, welche in der Fig. 1 mit 106 und 115 gezeigt und beschrieben sind. Mit anderen Worten kann das Griffstück die Handballenauflage und die Auflage für die Daumenwurzel des Benutzers aufweisen. Ein Zusammenbauen dieses erfindungsgemäßen Lenkerzusatzgriffs erfolgt durch einfaches Aufstecken des Aufsatzes auf die Grundkomponente.

Gemäß einem Ausführungsbeispiel ist ein Fahrrad mit einem Fahrradlenker nach einem der im Vorangegangenen beschriebenen Ausführungsbeispiele oder im Folgenden beschriebenen Ausführungsbeispiel angegeben.

Ergänzend sei darauf hingewiesen, dass "umfassend" und "aufweisend" keine anderen Elemente oder Schritte ausschließen und "eine" oder "ein" keine Vielzahl ausschließen. Ferner sei darauf hingewiesen, dass Merkmale oder Schritte, die mit dem Verweis auf eines der obigen Ausführungsbeispiele beschrieben worden sind, auch in Kombination mit anderen Merkmalen oder Schritten anderer oben beschriebener Ausführungsbeispiele der Erfindung verwendet werden können. Bezugszeichen in den Ansprüchen sind nicht als Einschränkungen anzusehen.

Im Folgenden werden mit Verweis auf die Figuren Ausführungsbeispiele der Erfindung beschrieben.

### KURZE BESCHREIBUNG DER FIGUREN

Fig. 1 zeigt eine schematische, dreidimensionale Darstellung eines Fahrradlenkers gemäß einem Ausführungsbeispiel der Erfindung.
Fig. 2 zeigt eine Schrägansicht eines Fahrradlenkers gemäß einem Ausführungsbeispiel der vorliegenden Erfindung.

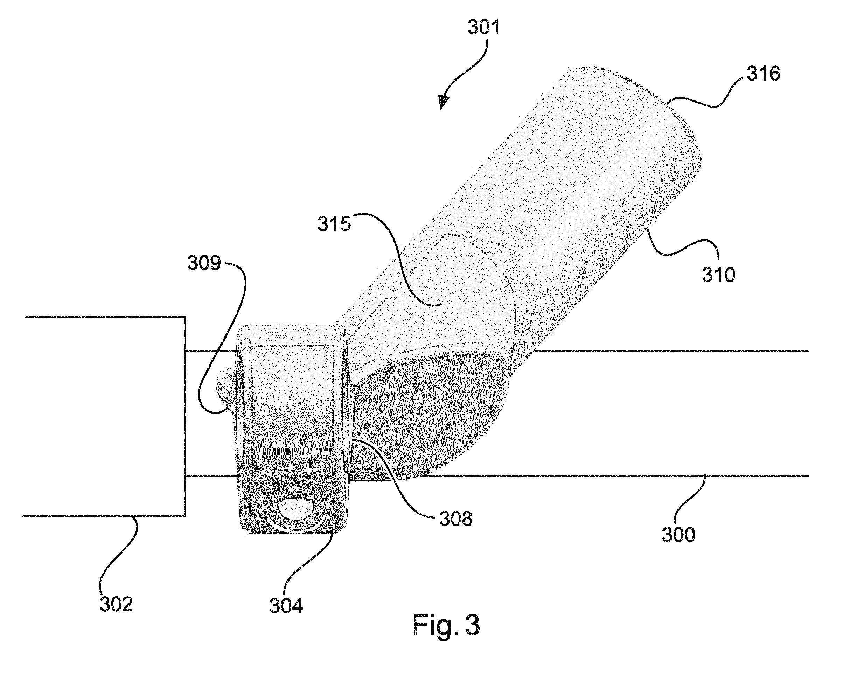

Fig. 3 zeigt eine schematische, dreidimensionale Darstellung eines Fahrradlenkers gemäß einem weiteren Ausführungsbeispiel der Erfindung.
Fig. 4 zeigt eine Schrägansicht eines Fahrradlenkers gemäß einem Ausführungsbeispiel der Erfindung.
Fig. 5 zeigt eine Seitenansicht eines Lenkerzusatzgriffs gemäß einem Ausführungsbeispiel der vorliegenden Erfindung.

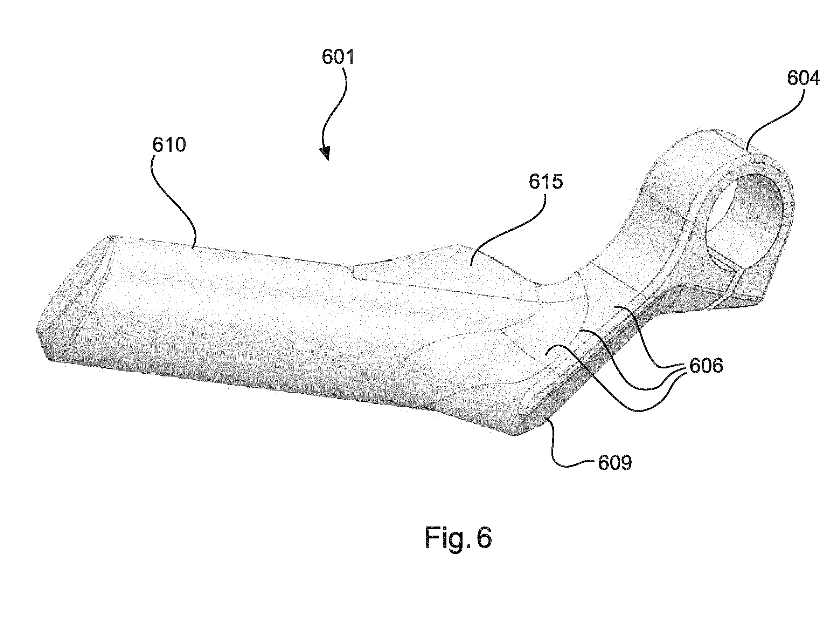

Fig. 6 zeigt eine Schrägansicht eines Lenkerzusatzgriffs gemäß einem Ausführungsbeispiel der Erfindung.
Fig. 7 zeigt eine Schrägansicht eines Lenkerzusatzgriffs gemäß einem Ausführungsbeispiel der Erfindung.

In den folgenden Figurenbeschreibungen werden für die gleichen oder ähnlichen Elemente die gleichen oder ähnlichen Bezugsziffern verwendet.

Die Darstellungen in den Figuren sind schematisch und nicht maßstäblich.

### DETAILLIERTE BESCHREIBUNG VON AUSFÜHRUNGSBEISPIELEN

Fig. 1 zeigt einen Fahrradlenker 100 mit einem Lenkerzusatzgriff 101, welcher eine Handballenauflage 106 bereitstellt. Der Fahrradlenker 100 weist einen üblichen Lenkergriff 102 und eine Armatur 103 auf. Beispielhaft ist diese Armatur 103 hier als Bremshebel ausgeführt, welcher unterhalb, das heißt entlang einer Unterseite des Lenkerzusatzgriffs, verläuft. Der Lenkerzusatzgriff 101 weist eine Schelle 104 zur Befestigung am Lenker 100 auf. Der Lenkerzusatzgriff weist einen ersten Abschnitt 105 auf, der sich ausgehend von der Schelle 104 vom Lenker 100 weg erstreckt. Der erste Abschnitt 105 weist eine obere abgeflachte Fläche 106 und eine untere abgeflachte Fläche (siehe beispielsweise Fig. 5, 519) auf. Dabei ist die obere abgeflachte Fläche des ersten Abschnitts derart angeordnet, dass sie eine Handballenauflage bereitstellt. Die obere abgeflachte Fläche 106 ist daher an der Oberseite 107 des Lenkerzusatzgriffs 101 angeordnet. Die untere abgeflachte Fläche verläuft entlang der Unterseite des Lenkerzusatzgriffs (siehe Fig. 5). Der Lenkerzusatzgriff weist ein Griffstück 110 zum Umgreifen durch den Benutzer auf. Die obere abgeflachte Fläche 106 definiert griffseitig eine Außenkante 111 und armaturseitig eine Innenkante 112. Wie der Fig. 1 deutlich zu entnehmen ist, ist das Griffstück von der Außenkante 111 zur Innenkante 112 versetzt. Weiterhin ist in Fig. 1 gut erkennbar, dass sich das Griffstück von dem ersten Abschnitt 106 entlang einer Richtung vom Lenker weg erstreckt, die schräg zur Haupterstreckungsrichtung 113 des ersten Abschnitts verläuft. Das Griffstück 110 schließt sich an die obere abgeflachte Fläche 106 in einem Bereich 114 an, der von der Außenkante 111 des Lenkerzusatzgriffs in Richtung der Armatur 103 angeordnet ist.

In dem Ausführungsbeispiel der Fig. 5 ist weiterhin deutlich zu erkennen, dass das Griffstück armaturseitig eine abgeflachte Auflagefläche 115 aufweist. Dies stellt eine Ablagefläche für die Daumenwurzel des Benutzers bereit. Die obere abgeflachte Fläche 106 erstreckt sich weiterhin lenkergriffseitig zumindest teilweise um das Griffstück 110. Dies erfolgt in dem Endbereich 117. Weiterhin ist der Fig. 1 zu entnehmen, dass der Endbereich 117 der oberen abgeflachten Fläche 106 in einen abgerundeten Bereich 118 des Lenkerzusatzgriffs in Richtung der Unterseite des Lenkerzusatzgriffs übergeht bzw. verläuft. Dieser Übergang kann ebenso auch deutlich der Fig. 5 entnommen werden, in welcher der abgerundete Bereich bzw. die abgerundete Fläche mit 518 gezeigt ist.

In der Schrägansicht der Fig. 2 ist ein weiterer Fahrradlenker mit einem erfindungsgemäßen Lenkerzusatzgriff 201 dargestellt. In dem ersten Abschnitt 205 des Lenkerzusatzgriffs 201 ist die obere abgeflachte Fläche 206 gezeigt, welche als Absenkung zwischen der Schelle 204 und dem Griffstück 210 ausgeführt ist. In Fig. 2 ist weiterhin deutlich zu sehen, dass die erste seitliche Anlagefläche 208 im Wesentlichen senkrecht zur oberen abgeflachten Fläche 206 verläuft. An dieser Oberseite 207 des Lenkerzusatzgriffs 201 wird damit eine Handballenauflage für den Benutzer bereitgestellt, die sich von der Schelle weg erstreckt und über das Griffstück 210 hinausgeht bzw. sich um das Griffstück 210 herum erstreckt. Die Ablagefläche 215 des Griffstücks 210 geht dabei abgerundet in einen unteren Bereich/eine untere Fläche 219 über. Diese untere Fläche 219 ist nicht halbkreisförmig ausgeführt, sondern bildet eine flache Fläche zur parallelen Auflage der Finger. Das gleich gilt für die Fläche 419 in Fig. 4.

In Fig. 3 ist ein weiteres Ausführungsbeispiel eines Fahrradlenkers 300 mit einem erfindungsgemäßen Lenkerzusatzgriff 301 gezeigt. Der Lenkergriff 302 ist links in der Fig. 3 von dem Lenkerzusatzgriff angeordnet. Das Griffstück 23 weist einen am vom Lenker entfernten Ende 316 einen kreisförmigen Querschnitt auf und es weist armaturseitig eine abgeflachte Auflagefläche 315 auf. Die senkrecht verlaufende seitliche Anlagefläche 308 ist in Fig. 3 ebenso deutlich zu erkennen. Die zweite seitliche Anlagefläche 309, welche schräg zwischen der oberen und unteren abgeflachten Fläche verläuft, ist ebenso der Fig. 9 zu entnehmen.

In der schrägen Ansicht der Fig. 4 ist ebenso ein Fahrradlenker 400 mit einem Lenkerzusatzgriff 401 gezeigt. Das Griffstück 410 weist eine armaturseitig abgeflachte Auflagefläche 415 auf, welche kontinuierlich in einen abgerundeten Bereich in Richtung der Unterseite des Lenkerzusatzgriffs übergeht. Die Fläche 415 läuft tangential von der Oberfläche des Griffstücks weg und bildet somit einen sanften Übergang, so dass eine niedrige spezifische Flächenbelastung erreicht wird. Die obere abgeflachte Fläche 406 des Lenkerzusatzgriffs ist als Absenkung zwischen der Schelle und dem Griffstück 410 ausgeführt und erstreckt sich teilweise um das Griffstück 410 herum. Die obere abgeflachte Fläche 406 erstreckt sich mittels eines Endbereichs 417 um das Griffstück herum, wobei der Endbereich in einen abgerundeten Bereich 418 übergeht, der sich in Richtung der Unterseite des Lenkerzusatzgriffs erstreckt bzw. in diese Richtung verläuft.

Fig. 5 zeigt eine Seitenansicht eines erfindungsgemäßen Lenkerzusatzgriffs 501. Dabei ist die Schelle 504 in der Seitenansicht deutlich zu erkennen und sowohl die Oberseite 507 als auch die Unterseite 520 des Lenkerzusatzgriffs 501 sind deutlich zu sehen. Die obere abgeflachte Fläche 506 zeigt in Richtung Benutzer, wohingegen die untere abgeflachte Fläche 519 Richtung Boden zeigt. Die zweite seitliche Anlagefläche 509, die schräg zwischen der oberen abgeflachten Fläche 507 und der unteren abgeflachten Fläche 519 verläuft, ist ebenso der Fig. 5 zu entnehmen. Die als Absenkung zwischen der Schelle und dem Griffstück 510 ausgeführte obere abgeflachte Fläche 506 geht in dem Endbereich 517 in den abgerundeten Bereich bzw. die abgerundete Fläche 518 über, welche sich von der Oberseite 507 in Richtung der Unterseite 520 des Lenkerzusatzgriffs wölbt.

Fig. 6 zeigt eine weitere Schrägansicht eines Ausführungsbeispiels des erfindungsgemäßen Lenkerzusatzgriffs 601. Analog zur Fig. 5 ist hier die Schelle 604, die Auflagefläche 615 des Griffstücks 610 sowie die erfindungsgemäße obere Auflagefläche 606 an der Oberseite des Lenkerzusatzgriffs gezeigt. Die schräg verlaufende Fläche 609 kann ebenso der Fig. 6 entnommen werden.

Gemäße einem weiteren Ausführungsbeispiel des Lenkerzusatzgriffs 701 weist das Griffstück 701 an seinem äußeren Ende, i.e., an seiner Spitze, einen Griffabschnitt 722 auf, der sich von der Spitze im Wesentlichen parallel zur Lenkerhauptachse des Lenkers 700 erstreckt. Dies zusätzliche Griffposition kann insbesondere für Marathonfahrer für eine verbesserte Ergonomie sorgen.

## Patentansprüche

1. Fahrradlenker (100) mit einem Lenkerzusatzgriff (101) zur Bereitstellung einer Handballenauflage, der Fahrradlenker aufweisend
einen Lenkergriff (102),
eine Armatur (103),
den Lenkerzusatzgriff (101) mit einer Schelle (104),
wobei der Lenkerzusatzgriff zwischen dem Lenkergriff und der Armatur mittels der Schelle am Lenker befestigt ist,
wobei der Lenkerzusatzgriff einen ersten Abschnitt (105) aufweist, der sich ausgehend von der Schelle vom Lenker weg erstreckt,
wobei der erste Abschnitt eine obere abgeflachte Fläche (106, 506) und eine untere abgeflachte Fläche (519) aufweist, und
wobei die obere abgeflachte Fläche derart angeordnet ist, dass sie eine Handballenauflage bereitstellt.

2. Fahrradlenker nach Anspruch 1,
wobei die obere abgeflachte Fläche (106, 506) an einer Oberseite (107, 507) des Lenkerzusatzgriffs (101) verläuft, und
wobei die untere abgeflachte Fläche (519) an einer Unterseite (520) des Lenkerzusatzgriffs verläuft.

3. Fahrradlenker nach einem der Ansprüche 1 oder 2,
wobei der erste Abschnitt (105) des Lenkerzusatzgriffs zwischen der oberen abgeflachten Fläche (106) und der unteren abgeflachten Fläche (519) armaturseitig eine erste seitliche Anlagefläche (108, 208) aufweist,
wobei die erste seitliche Anlagefläche (108, 208) die obere und untere abgeflachte Fläche verbindet,
wobei die erste seitliche Anlagenfläche (108, 208) im Wesentlichen senkrecht zur oberen abgeflachten Fläche (106) und/oder im Wesentlichen senkrecht zur unteren abgeflachten Fläche (519) verläuft, und
wobei der erste Abschnitt des Lenkerzusatzgriffs zwischen der oberen abgeflachten Fläche und der unteren abgeflachten Fläche lenkergriffseitig eine zweite seitliche Anlagefläche (109, 509) aufweist, und
wobei die zweite seitliche Anlagefläche (109, 509) schräg zwischen der oberen und der unteren abgeflachten Fläche verläuft.

4. Fahrradlenker nach einem der vorherigen Ansprüche,
wobei der Lenkerzusatzgriff ein Griffstück (110) zum Umgreifen durch den Benutzer aufweist,
wobei die obere abgeflachte Fläche (106) griffseitig eine Außenkante (111) und armaturseitig eine Innenkante (112) des Lenkerzusatzgriffs definiert, und
wobei das Griffstück von der Außenkante (111) zur Innenkante (112) hin versetzt ist.

5. Fahrradlenker nach Anspruch 4,
wobei sich das Griffstück (110, 310) von dem ersten Abschnitt entlang einer im Vergleich zu einer Haupterstreckungsrichtung (113) des ersten Abschnitts schrägen Richtung vom Lenker weg erstreckt, und
wobei sich das Griffstück (110, 310) an die obere abgeflachte Fläche in einem Bereich (114) anschließt, der von der Außenkante (111) des Lenkerzusatzgriffs in Richtung der Armatur angeordnet ist.

6. Fahrradlenker nach einem der Ansprüche 4 oder 5,
wobei das Griffstück armaturseitig eine abgeflachte Auflagefläche (115) aufweist.

7. Fahrradlenker nach einem der Ansprüche 4 bis 6,
wobei das Griffstück an seinem vom Lenker entfernten Ende (116) einen im wesentlichen kreisförmigen Querschnitt aufweist.

8. Fahrradlenker nach einem der Ansprüche 4 bis 7,
wobei sich die obere abgeflachte Fläche (106) lenkergriffseitig zumindest teilweise um das Griffstück herum in einen Endbereich (117) erstreckt.

9. Fahrradlenker nach Anspruch 8,
wobei der Endbereich (117) der oberen abgeflachten Fläche in einen abgerundeten Bereich (118, 518) des Lenkerzusatzgriffs in Richtung einer Unterseite (520) des Lenkerzusatzgriffs verläuft.

10. Fahrradlenker nach einem der Ansprüche 4 bis 9,
wobei die obere abgeflachte Fläche als Absenkung zwischen der Schelle und dem Griffstück ausgeführt ist.

11. Fahrradlenker nach einem der vorhergehenden Ansprüche,
wobei der Lenkerzusatzgriff zweistückig mit einer ersten und einer zweiten Komponente ausgeführt ist,
wobei die erste Komponente des Lenkerzusatzgriffs als Grundkomponente mit einem Dorn ausgeführt ist,
wobei die zweite Komponente als Aufsatz zum Aufstecken auf den Dorn der Grundkomponente ausgeführt ist.

12. Fahrradlenker nach Anspruch 11,
wobei zweite Komponente ein Griffstück und zwei Auflageflächen aufweist, welche seitlich an dem Griffstück angeordnet sind.

13. Fahrradlenker nach einem der Ansprüche 11 oder 12,
wobei die zweite Komponente in Kunststoff ausgeführt ist.

14. Fahrradlenker nach einem der vorherigen Ansprüche,
wobei die obere abgeflachte Fläche und die untere abgeflachte Fläche zumindest teilweise parallel verlaufen.

15. Fahrrad mit einem Fahrradlenker nach einem der Ansprüche 1 bis 14.

## Geänderte Patentansprüche

### Geänderte Patentansprüche gemäss Regel 137(2) EPÜ.

1. Fahrradlenker (100) mit einem Lenkerzusatzgriff (101) zur Bereitstellung einer Handballenauflage, der Fahrradlenker aufweisend
einen Lenkergriff (102),
eine Armatur (103),
den Lenkerzusatzgriff (101) mit einer Schelle (104),
wobei der Lenkerzusatzgriff zwischen dem Lenkergriff und der Armatur mittels der Schelle am Lenker befestigt ist,
wobei der Lenkerzusatzgriff einen ersten Abschnitt (105) aufweist, der sich ausgehend von der Schelle vom Lenker weg erstreckt,
wobei der erste Abschnitt eine obere abgeflachte Fläche (106, 506) und eine untere abgeflachte Fläche (519) aufweist, und
wobei die obere abgeflachte Fläche derart angeordnet ist, dass sie eine Handballenauflage bereitstellt,
wobei der Lenkerzusatzgriff ein Griffstück (110) zum Umgreifen durch den Benutzer aufweist,
wobei die obere abgeflachte Fläche (106) griffseitig eine Außenkante (111) und armaturseitig eine Innenkante (112) des Lenkerzusatzgriffs definiert,
**dadurch gekennzeichnet, dass** das Griffstück von der Außenkante (111) zur Innenkante (112) hin versetzt ist.

2. Fahrradlenker nach Anspruch 1,
wobei die obere abgeflachte Fläche (106, 506) an einer Oberseite (107, 507) des Lenkerzusatzgriffs (101) verläuft, und
wobei die untere abgeflachte Fläche (519) an einer Unterseite (520) des Lenkerzusatzgriffs verläuft.

3. Fahrradlenker nach einem der Ansprüche 1 oder 2,
wobei der erste Abschnitt (105) des Lenkerzusatzgriffs zwischen der oberen abgeflachten Fläche (106) und der unteren abgeflachten Fläche (519) armaturseitig eine erste seitliche Anlagefläche (108, 208) aufweist,
wobei die erste seitliche Anlagefläche (108, 208) die obere und untere abgeflachte Fläche verbindet,
wobei die erste seitliche Anlagenfläche (108, 208) im Wesentlichen senkrecht zur oberen abgeflachten Fläche (106) und/oder im Wesentlichen senkrecht zur unteren abgeflachten Fläche (519) verläuft, und
wobei der erste Abschnitt des Lenkerzusatzgriffs zwischen der oberen abgeflachten Fläche und der unteren abgeflachten Fläche lenkergriffseitig eine zweite seitliche Anlagefläche (109, 509) aufweist, und
wobei die zweite seitliche Anlagefläche (109, 509) schräg zwischen der oberen und der unteren abgeflachten Fläche verläuft.

4. Fahrradlenker nach einem der vorherigen Ansprüche,
wobei sich das Griffstück (110, 310) von dem ersten Abschnitt entlang einer im Vergleich zu einer Haupterstreckungsrichtung (113) des ersten Abschnitts schrägen Richtung vom Lenker weg erstreckt, und
wobei sich das Griffstück (110, 310) an die obere abgeflachte Fläche in einem Bereich (114) anschließt, der von der Außenkante (111) des Lenkerzusatzgriffs in Richtung der Armatur angeordnet ist.

5. Fahrradlenker nach einem der vorherigen Ansprüche,
wobei das Griffstück armaturseitig eine abgeflachte Auflagefläche (115) aufweist.

6. Fahrradlenker nach einem der vorherigen Ansprüche,
wobei das Griffstück an seinem vom Lenker entfernten Ende (116) einen im wesentlichen kreisförmigen Querschnitt aufweist.

7. Fahrradlenker nach einem der vorherigen Ansprüche,
wobei sich die obere abgeflachte Fläche (106) lenkergriffseitig zumindest teilweise um das Griffstück herum in einen Endbereich (117) erstreckt.

8. Fahrradlenker nach Anspruch 7,
wobei der Endbereich (117) der oberen abgeflachten Fläche in einen abgerundeten Bereich (118, 518) des Lenkerzusatzgriffs in Richtung einer Unterseite (520) des Lenkerzusatzgriffs verläuft.

9. Fahrradlenker nach einem der vorherigen Ansprüche,
wobei die obere abgeflachte Fläche als Absenkung zwischen der Schelle und dem Griffstück ausgeführt ist.

10. Fahrradlenker nach einem der vorhergehenden Ansprüche,
wobei der Lenkerzusatzgriff zweistückig mit einer ersten und einer zweiten Komponente ausgeführt ist,
wobei die erste Komponente des Lenkerzusatzgriffs als Grundkomponente mit einem Dorn ausgeführt ist,
wobei die zweite Komponente als Aufsatz zum Aufstecken auf den Dorn der Grundkomponente ausgeführt ist.

11. Fahrradlenker nach Anspruch 10,
wobei zweite Komponente ein Griffstück und zwei Auflageflächen aufweist, welche seitlich an dem Griffstück angeordnet sind.

12. Fahrradlenker nach einem der Ansprüche 10 oder 11,
wobei die zweite Komponente in Kunststoff ausgeführt ist.

13. Fahrradlenker nach einem der vorherigen Ansprüche,
wobei die obere abgeflachte Fläche und die untere abgeflachte Fläche zumindest teilweise parallel verlaufen.

14. Fahrrad mit einem Fahrradlenker nach einem der Ansprüche 1 bis 13.
